# EUROPEAN PATENT APPLICATION

(11) **EP 3 296 858 A1**
(43) Date of publication of application: **21.03.2018**
(21) Application number: 17191225.6
(22) Date of filing: 15.09.2017
(51) Int. Cl.: G06F 3/12

(54) **INFORMATION PROCESSING APPARATUS, INFORMATION PROCESSING METHOD, AND CARRIER MEANS**

(30) Priority: 16.09.2016 JP 2016182128; 03.08.2017 JP 2017150544
(71) Applicant: Ricoh Company Ltd., Ohta-ku Tokyo 143-8555 (JP)
(72) Inventor: MORI, Shinya, Tokyo, 143-8555 (JP)
(74) Representative: Schwabe - Sandmair - Marx

(57) **Abstract**

An information processing apparatus (10) includes a memory (13, 14) that stores print target data and a processor (11) that controls transfer of the print target data stored in the memory (13, 14) to an output apparatus (20) in response to a request for print target data that is received from the output apparatus (20), detects a shutdown event as a trigger for shutting down the information processing apparatus (10), and controls shutdown of the information processing apparatus (10) according to a determination of whether the print target data subjected to printing is stored in the memory (13, 14), when the shutdown event is detected.

## Description

### BACKGROUND

### Technical Field

The present invention relates to an information processing apparatus, an information processing method, and carrier means such as a recording medium storing an information processing program.

### Background Art

In the background pull-print system using a server, when a client personal computer (PC) transfers a print job to a print server, the print server stores the print job in its memory. In accordance with a command to print, received from an operation terminal for operating an output apparatus (e.g., an image forming apparatus etc.) by user operation, the print server transfers the print job stored in the print server to the output apparatus, and the output apparatus performs the print job.

On the other hand, instead of storing the print job in the print server, the user may instruct the client PC to store the print job in its memory. In such client pull-print system, the output apparatus acquires the print job stored in the client PC for output.

### SUMMARY

Example embodiments of the present invention provide a novel information processing apparatus that includes a memory that stores print target data and a processor that controls transfer of the print target data stored in the memory to an output apparatus in response to a request for print target data that is received from the output apparatus, detects a shutdown event as a trigger for shutting down the information processing apparatus, and controls shutdown of the information processing apparatus according to a determination of whether the print target data subjected to printing is stored in the memory, when the shutdown event is detected.

Further example embodiments of the present invention provide an information processing method, and carrier means such as a recording medium storing an information processing program.

In the embodiments described below, an information processing apparatus that is capable of performing control appropriately in shutting down the client PC in the client pull-print system is provided.

### BRIEF DESCRIPTION OF THE DRAWINGS

A more complete appreciation of the disclosure and many of the attendant advantages thereof will be readily obtained as the same becomes better understood by reference to the following detailed description when considered in conjunction with the accompanying drawings.
FIG. 1 is a diagram illustrating a network configuration of an information processing system as an embodiment of the present invention;
FIG. 2 is a diagram illustrating associated information according to an embodiment of the present invention;
FIG. 3 is a block diagram illustrating a hardware configuration of a client terminal as an embodiment of the present invention;
FIG. 4 is a block diagram illustrating a functional configuration of the client terminal as an embodiment of the present invention;
FIG. 5 is a diagram illustrating print job information according to an embodiment of the present invention;
FIG. 6 is a diagram illustrating a message screen as an example embodiment of the present invention;
FIG. 7 is a flowchart illustrating operation performed by the client terminal as an embodiment of the present invention;
FIG. 8 is a sequence diagram illustrating operation performed by the information processing system as an embodiment of the present invention;
FIG. 9 is a flowchart illustrating operation performed by the client terminal as an embodiment of the present invention;
FIG. 10 is a diagram illustrating a message screen as an example embodiment of the present invention;
FIG. 11 is a diagram illustrating a message screen as an example embodiment of the present invention;
FIG. 12 is a flowchart illustrating operation performed by the client terminal as an embodiment of the present invention;
FIG. 13 is a diagram illustrating a message screen as an example embodiment of the present invention;
FIG. 14 is a flowchart illustrating operation performed by the client terminal as an embodiment of the present invention;
FIG. 15 is a sequence diagram illustrating an operation performed by the information processing system as an embodiment of the present invention;
FIG. 16 is a flowchart illustrating operation performed by the client terminal as an embodiment of the present invention;
FIG. 17 is a flowchart illustrating operation performed by the client terminal as an embodiment of the present invention;
FIG. 18 is a flowchart illustrating operation performed by the client terminal as an embodiment of the present invention;
FIG. 19 is a flowchart illustrating operation performed by the client terminal as an embodiment of the present invention, and
FIG. 20 is a flowchart illustrating operation performed by the client terminal as an embodiment of the present invention.

The accompanying drawings are intended to depict example embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result.

A more complete appreciation of the disclosure and many of the attendant advantages thereof will be readily obtained as the same becomes better understood by reference to the following detailed description when considered in conjunction with the accompanying drawings.

Embodiments of the present invention are described below in detail with reference to figures. In figures, same symbols are assigned to same or corresponding parts, and their descriptions are simplified or omitted appropriately.

Exemplary embodiments of this disclosure are now described below with reference to the accompanying drawings.

### First Embodiment

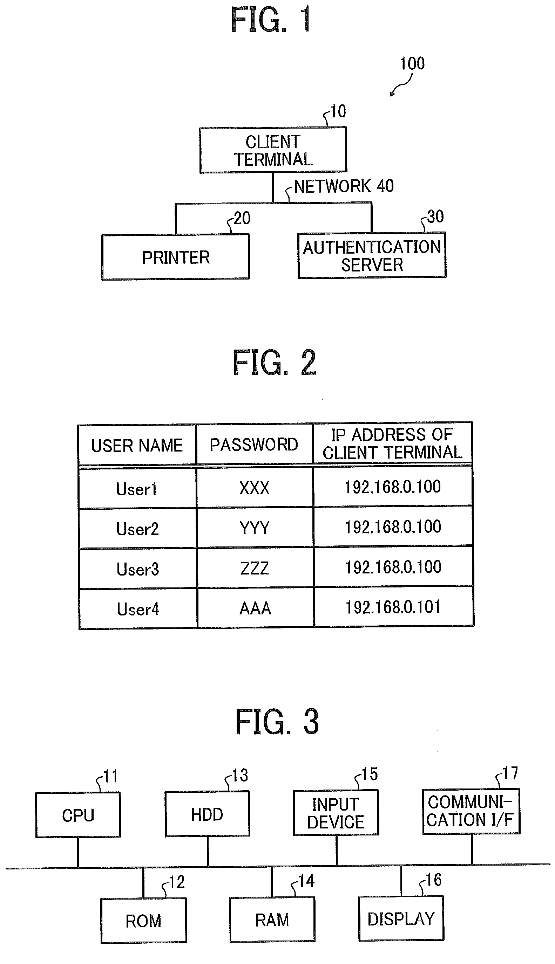

FIG. 1 is a schematic diagram of an information processing system 100 in this embodiment. As illustrated in FIG. 1, the information processing system 100 includes a client terminal 10, a printer 20, and an authentication server 30, which are connected with each other via a network 40 such as the Internet. The network 40 may be wired or wireless. It is assumed that the information processing system 100 in this embodiment at least functions as a client pull-print system in which the client terminal 10 stores a print job and, in accordance with a command to print by user operation, sends the print job stored in the client terminal 10 to the printer 20 for output. In addition, the information processing system 100 may function as a server pull-print system in which a printer server stores a print job received from the client terminal 10, and sends the print job stored in the print server to the printer 20 for output. For example, the information processing system 100 may be configured such that a user is able to select whether to cause the print job be stored in the client terminal 10 or the print server when instructing to store the print job. Alternatively, the information processing system 100 may be configured such that the client terminal 10 selects a destination of the print job (i.e., the client terminal 10 or the print server) dynamically according to a content of the print data. While the information processing system 100 may function as the server pull-print system and the client pull-print system, for the descriptive purposes, the following describes the case in which the client pull-print system is implemented. Here, the print job is an example of print target data, which is data subjected to printing.

It should be noted that, for the sake of convenience, the information processing system 100 illustrated in FIG. 1 includes one client terminal 10 and one printer 20. However, the number of apparatuses in the information processing system 100 may be changed as appropriate.

The client terminal 10, which is one example of the information processing apparatus, is any terminal operated by one or more users. For example, the user may use the client terminal 10 for his or her work, task, or any other purposes. For example, the client terminal 10 may be a PC. The client terminal 10 may only be used by one user, or may be shared by multiple users.

The printer 20, which is one example of the output apparatus, outputs the print job stored in the client terminal 10. The output apparatus is not limited to the printer 20, such that any other desired type of output apparatus may be used. For example, another image forming apparatus such as a multifunction peripheral (MFP), a copier, a scanner, and a line printer etc. may be used as the output apparatus. In addition, an apparatus that outputs display such as a projector may be used.

The authentication server 30 is a server that authenticates the user to determine whether or not the user has authority to use the printer 20. In other words, the authentication server 30 is a server for authenticating a user to use the printer 20. For each user who has authority to use the printer 20, the authentication server 30 preliminarily stores authentication information used for authentication (information to be used for confirming the user). In this embodiment, the authentication information is a combination of a user name and a password. However, the authentication information is not limited to that example. For example, the authentication information may be a user ID uniquely assigned to each user. As described later in more detail, to allow the user to start using the client terminal 10, authentication processing that determines whether or not the user has authority to use the client terminal 10 is performed. The authentication information (information to be used for confirming a user) used for authenticating the user when logging in the client terminal 10 may be the same as, or different from, authentication information used for authorizing a user to use the printer.

In addition, the authentication server 30 stores association information associating each user with the client terminal 10 used by that user. FIG. 2 is a diagram illustrating an example of the association information. For each combination of a user name and a password (i.e., for information used for identifying a user), an IP address assigned to the client terminal 10 used by the user on the network 40 is associated. In this case, one item of information for identifying the user corresponds to one IP address. However, for example, one user may use multiple client terminals 10. That is, one item of information for identifying the user may correspond to multiple IP addresses.

As described later in more detail, in accordance with a request from the printer 20, after the authentication server 30 authenticates a user who uses the printer 20, the authentication server 30 refers to the association information described above and transfers the IP address corresponding to the authenticated user to the printer 20. The printer 20 requests the client terminal 10 specified by the IP address to transfer one or more print jobs requested by the authenticated user.

Next, a configuration of the client terminal 10 is described below. FIG. 3 is a block diagram illustrating a hardware configuration of the client terminal 10 in this embodiment. As illustrated in FIG. 3, the client terminal 10 includes a central processing unit (CPU) 11, a read only memory (ROM) 12, a hard disk drive (HDD) 13, a random access memory (RAM) 14, an input device 15, a display 16, and a communication interface (I/F) 17. It should be noted that the printer 20 and the authentication server 30 each have a similar hardware configuration as the one illustrated in FIG. 3.

The CPU 11 controls the client terminal 10, by performing operations according to programs and data read from a storage device such as the ROM 12 and the HDD 13 etc., onto the RAM 14.

The ROM 12 is a nonvolatile semiconductor memory that can keep programs and data even after the power is turned off (i.e., even if power supply to the client terminal 10 is cut off). The ROM 12 stores a Basic Input/Output System (BIOS) to be executed during a boot-up sequence of the client terminal 10, an OS configuration data, and programs and data such as network settings etc.

The HDD 13 is a nonvolatile storage device that stores programs and data. The HDD 13 stores an operating system (OS) for controlling the entire client terminal 10 and application software that implements various functions running on the OS (hereinafter simply referred to as "application") etc. It should be noted that the client terminal 10 may utilize a drive device using a flash memory as a storage medium (such as a solid state drive (SSD)) instead of the HDD 13.

The RAM 14 is an example of a volatile storage device that stores a program and data temporarily and functions as a work area for the CPU 11 to perform operations.

The input device 15 is a device used for inputting various operating signals by user operation. Examples of the input device 15 are a keyboard, mouse, and touch panel etc. The display 16 is a device that displays various information (e.g., operation results performed by the client terminal 10 etc.). An example of the display 16 is a liquid crystal display (LCD). It should be noted that the input device 15 and the display 16 may be incorporated into one device, for example, as a touch panel. In addition, the input device 15 and the display 16 may be external to the client terminal 10, but connected and used as needed.

The communication I/F 17 is an interface for connecting the client terminal 10 to the network 40, such as a network interface circuit.

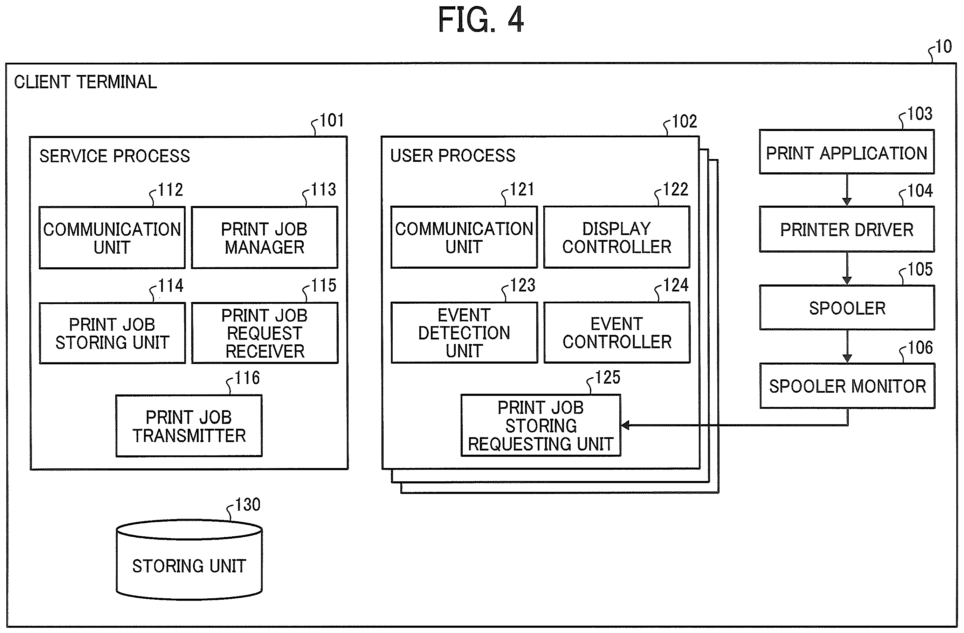

FIG. 4 is a block diagram illustrating a functional configuration of the client terminal 10 in this embodiment. In this embodiment, as programs running on the OS of the client terminal 10, a service process 101 and multiple user processors 102 are at least executed. The service process 101 is a common service in the system (running while the client terminal 10 is turned on), which runs regardless of a login status of a user (i.e., regardless of whether or not an authenticated and login user exists). The multiple user processes 102 respectively correspond to multiple user accounts of users who have authority to use the client terminal 10, and each user process 102 runs in each user session. The account is used by the client terminal 10, for logging in. The account may be the user ID described above or a combination of the user ID and the password. Each user process 102 starts when the corresponding user is authenticated and logs in and ends when the corresponding user logs off. That is, the user process 102 runs only while the user is logging in and ends (stops running) when the user logs off. Here, the "login" is a status that it is confirmed that the user account exists (i.e., the user account is authenticated) and use of the client terminal 10 is allowed. The "logoff' is a status that the user finishes using the client terminal 10 as the login user (i.e., the user relinquishes authority to use the client terminal 10, and the login status is not maintained anymore). Login and logoff of users are managed by the OS, and the user process 102 starts or ends in accordance with a command by the OS.

Here, the OS includes a function (an authentication unit) that determines whether or not the user has authority to use the client terminal 10. That is, the OS authenticates the user who uses the client terminal 10. In this case, when the user has not been authenticated yet, an account input screen for accepting input of an account (such as the combination of the user name and password etc.) by user operation is displayed on the display 16, and the OS authenticates the user by using the account accepted via the account input screen. For example, if the external server stores in its memory information for confirming the user (authenticating the user) (hereinafter referred to as "identification information"), the OS may transfer the account accepted via the account input screen to the external server to request the external server to authenticate the user and receive the authentication result. By contrast, if the client terminal 10 stores in its memory the identification information, the OS may authenticate the user by determining whether or not the account accepted via the account input screen exists using the identification information preliminarily stored in the client terminal 10. If the OS authenticates the user (the authentication result is OK), the user process 102 corresponding to the authenticated user is changed to an active (valid) status.

Other examples of the program that may run on the OS are a print application 103, a printer driver 104, a spooler 105, and a spooler monitor 106, etc. In this embodiment, the print application 103 is provided with a function of generating print target data such as document data (data as a target of a print job) in accordance with user operation, a function of displaying a print setting screen, and a function of accepting a command to print the print target data ("print command"), input on the print setting screen by user operation etc. In this embodiment, when instructing to print the print target data via the print setting screen, in addition to specifying the print target data as a target, the user specifies a printer icon (indicating a printer registered in the client terminal 10) of a printer with a port for pull-print. That is, the print command includes at least information specifying the print target data to be printed and information specifying the printer icon representing the printer to print. It should be noted that multiple printer icons each specifying a print target data destination may be created (registered) for display by the client terminal 10. With creation of the printer icon, a printer driver 104 and a port are set as parameters for each print target data destination. In this embodiment, the printer driver 104 exists for each printer icon. After the print application 103 accepts the print command, which is input through the print setting screen, the print application 103 transfers the request to print the specified print target data, to the printer driver 104 corresponding to the printer icon specified by the accepted print command.

The printer driver 104 provides a function of generating a print job. In response to receiving the request to print from the print application 103, the printer driver 104 generates a print job based on the request to print, and transfers the print job to the spooler 105. The spooler 105 provides a function of storing the print job generated by the printer driver 104 temporarily and executes the stored print job sequentially. The spooler monitor 106 monitors the print job being spooled by the spooler 105. In this embodiment, with reference to the parameter (i.e., the configured port) of the print job spooled in the spooler 105, by determining whether or not the output destination of the print job corresponds to the printer 20 used by the client pull-print system (i.e., the information processing system 100), the spooler 106 may determine whether or not the print job corresponds to the job for the pull-print system. In case of determining that the print job is the job for the pull-print system, the spooler monitor 106 obtains the print job from the spooler 105 and transfers the print job to the user process 102. Here, at least a part of the programs described above may be included in the service process 101 or the user process 102.

The above-described service process 101, the user processes 102, the print application 103, the printer driver 104, the spooler 105, and the spooler monitor 106 are a set of instructions executed by the CPU 11 according to the programs. The client terminal 10 further includes a storing unit 130, which corresponds to a memory such as the RAM 14.

As illustrated in FIG. 4, the service process 101 includes a communication unit 112, a print job manager 113, a print job storing unit 114, a print job request receiver 115, and a print job transmitter 116. In this embodiment, functions related to this embodiment are mainly described. However, functions included in the service process 101 are not limited to the functions described here.

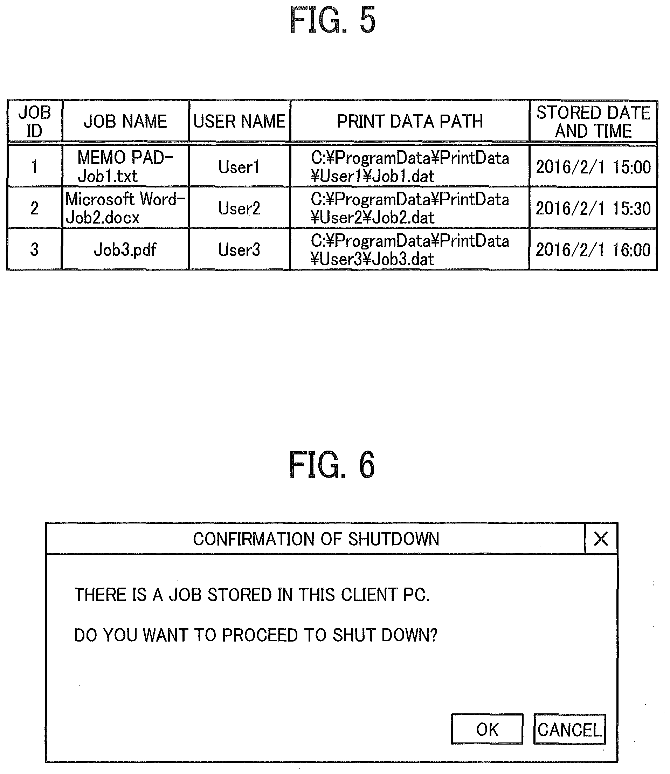

The communication unit 112 performs data communication with one or more external apparatuses. The print job manager 113 manages print jobs stored in the storing unit 130 in the client terminal 10. Here, one print job includes print data (image data to be printed) and print job information indicating bibliographic information of the print data. FIG. 5 is a diagram illustrating the print job information in this embodiment. As illustrated in FIG. 5, the print job information includes a job ID uniquely assigned to the job, a job name identifying the job, a user name of the user requesting the print job, a print data path indicating an address where the print data is stored in the storing unit 130, and stored date and time when the print data is stored. The storing unit 130 may store one or more items of print job information and print data corresponding to the one or more print job information.

Now, the description continues with reference to FIG. 4. In accordance with a request from the user process 102 (described later), the print job storing unit 114 stores the print job in the storing unit 130.

The print job request receiver 115 receives the print job request that requests the print job from the printer 20. As described later, examples of the print job request include a print job information request that requests print job information, and a print data request that requests print data.

In accordance with the request from the printer 20, the print job transmitter 116 transfers the print job stored in the storing unit 130 to the printer 20. More specifically, in accordance with the print job request received by the print job request receiver 115, the print job transmitter 116 transfers the print job stored in the storing unit 130 to the printer 20.

Next, functions of the user process 102 are described below. In the following, one of the user processes 102 is described as an example. However, other user processes 102 may also have similar functions.

As illustrated in FIG. 4, the user process 102 includes a communication unit 121, a display controller 122, an event detection unit 123, an event controller 124, and a print job storing requesting unit 125. In this embodiment, functions related to this embodiment are mainly described. However, functions included in the user process 102 are not limited to the functions described here.

The communication unit 121 performs data communication with one or more external apparatuses. The display controller 122 displays various information such as a screen including a message (described later) etc. on the display 16. In addition, after the user process 102 starts, the display controller 122 may display a screen reflecting the user's personal settings (i.e., a screen after login) on the display 16.

The event detection unit 123 detects various events from the OS. In this embodiment, the event detection unit 123 has a function that detects a shutdown event that cause the information processing apparatus 10 to shut down. When the information processing apparatus 10 is shut down, the information processing apparatus 10 is not supplied with electric power such that is becomes unable to communicate with the external apparatus such as the printer.

The event controller 124 performs control in accordance with the event detected by the event detection unit 123. For example, the event controller 124 commands the OS to shut down or log off to discard the status that the user is authenticated, based on a detection of shutdown event.

The event controller 124 controls to perform shutdown in accordance with a determination of whether the print job is stored if the event detection unit 123 detects the shutdown event. In this embodiment, if the print job is stored in the storing unit 130, the event controller 124 does not perform shutdown and displays a screen including a message indicating that the print job still exists (hereinafter referred to as "message screen" in some cases) on the display 16. More specifically, the event controller 124 requests the display controller 122 to display the message screen. In response to receiving the request, the display controller 122 displays the message screen on the display 16.

The message screen in this embodiment further includes a display component for accepting a command to perform shutdown or not. FIG. 6 is a diagram illustrating the message screen in this embodiment. In FIG. 6, the display component for accepting the command to shut down or not is performed includes a button for accepting a command (user instruction) to shut down (the button indicating "OK") and a button for accepting a command not to select shut down (the button indicating "cancel"). However, the configuration of the display component is not limited to that example described above.

In case of accepting the request to shut down (accepting that the button indicating "OK" in FIG. 6 is pressed), the event controller 124 performs shutdown. By contrast, in case of accepting the request not to shut down (accepting that the button indicating "cancel" in FIG. 6 is pressed), the event controller 124 cancels shutdown operation.

The print job storing requesting unit 125 requests the service process 101 to store the print job transferred by the spooler monitor 106.

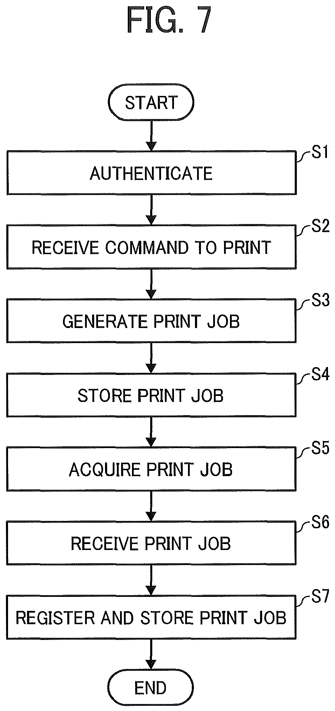

FIG. 7 is a flowchart illustrating operation from authenticating the user to storing the print job, performed by the client terminal 10 in this embodiment. As illustrated in FIG. 7, first, the OS (the authentication unit) of the client terminal 10 authenticates the user who is operating the client terminal 10 in S1. For the sake of convenience, in the description below, it is assumed that the user is authenticated in step S1 and the user process 102 corresponding to the authenticated user is executed under control of the OS. In this embodiment, after the user inputs the user's own account and logs in the client terminal 10, the user process 102 that runs in the user session starts. As a screen after login, a screen reflecting the user's personal settings is displayed. Subsequently, the user starts the print application 103 to generate the print target data of the print job. After that, the user commands to print the generated print target data. As described above, in commanding to print the print target data, in addition to specifying the print target data as a target for printing, the user specifies a printer icon of the printer configured with a port for pull-print.

Next, after the print application 103 accepts the command to print by user operation in S2, the print application 103 transfers the request to print the print target data, which includes the print target data specified by the command to print, to the printer driver 104 corresponding to the printer icon specified by the accepted command to print.

Next, the printer driver 104 generates a print job based on the request to print received from the print application 103 in step S3, and transfers the generated print job to the spooler 105. The spooler 105 stores the print job received from the printer driver 104 temporarily in S4.

The spooler monitor 106 constantly monitors the print job that has been registered to the spooler 105. After the client pull-print print job is registered, the spooler monitor 106 acquires the print job from the spooler 105 in S5 and transfers the print job to the user process 102 (i.e., the print job storing requesting unit 125). As described above, with reference to the parameter (i.e., the configured port) of the print job spooled in the spooler 105, the spooler 106 determines whether or not the output destination of the print job corresponds to the printer 20 used by the client pull-print system (i.e., the information processing system 100), that is, whether or not the print job corresponds to the print job for the pull-print system.

The print job storing requesting unit 125 receives the print job from the spooler monitor 106 in S6. After receiving the print job from the spooler 105, the print job storing requesting unit 125 commands the service process 101 to store the print job. After receiving the command, in accordance with the command, the service process 101 (the print job storing unit 114) registers and stores the print job in the storing unit 130 in S7. The service process 101 may store the print job as a file in the local memory, or use a database (DB) to store the print job.

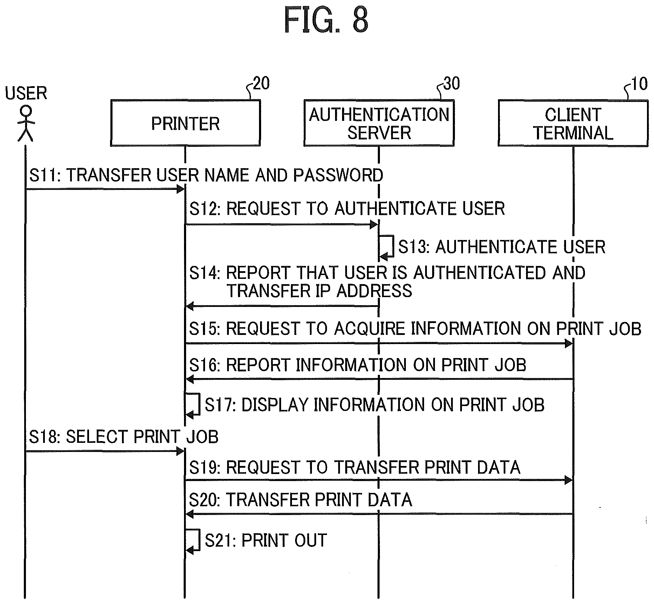

FIG. 8 is a sequence diagram illustrating operation, from acquiring the print data at the printer 20 from the client terminal 10 to outputting the print data, performed by the information processing system 100 in this embodiment. First, after the user finishes storing the print job in the client terminal 10, in order to log into the printer 20, the user operating the printer 20 inputs the user name and password at the printer 20 in S 11. In this embodiment, the printer 20 whose status is logoff status (a status that no user is authenticated and the power is turned on) displays a login screen for accepting inputs of the user name and password, and the user may input the user name and password on the login screen.

After accepting inputs of the user name and password, the printer 20 transfers the authentication request that includes the accepted user name and password and requests to perform authentication to the authentication server 30 in S12. In response to receiving the authentication request, the authentication server 30 performs authentication in S13. More specifically, the authentication server 30 determines whether or not authentication information corresponding to the combination of the user name and password included in the authentication request exists among the authentication information preliminarily stored. For the sake of convenience, in the description below, it is assumed that the authentication result in S13 indicates that authentication succeeds (i.e., the authentication information corresponding to the user name and password included in the authentication request exists among the authentication information preliminarily stored). With reference to the association information (illustrated in FIG. 2) described above, the authentication server 30 specifies the IP address associated with the combination of the authenticated user's user name and password, and transfers information that the user is authenticated and the specified IP address of the client terminal 10 to the printer 20 as the response to the authentication request in S14.

Next, the printer 20 transfers a request for print job information including the user name to the client terminal 10 specified by the IP address received from the authentication server 30 in S15. In response to receiving the request for print job information, the client terminal 10 selects all items of print job information, each including the user name included in the received request for print job information, from among items of print job information stored in the storing unit 130, and transfers the selected one or more items of print job information to the printer 20 in S16.

After receiving one or more items of print job information from the client terminal 10 as the response to the request for print job information, the printer 20 displays the received one or more items of print job information in S17. The user selects print job information of a print job to be performed, from among the displayed one or more items of print job information in S18. After accepting the user operation, the printer 20 transfers a request for print data that includes specifying information (such as job ID etc.) specifying the print job information selected by the user, and requests print data corresponding to the specified print job information to the client terminal 10 in S19.

After receiving the request for print data, the client terminal 10 selects print data corresponding to the print job information specified by the specifying information included in the received request for print data, from among a plurality of items of print data stored in the storing unit 130, and transfers the selected print data to the printer 20 in S20. After receiving the print data from the client terminal 10 as the response to the request for print data, the printer 20 prints out an image based on the received print data in S21.

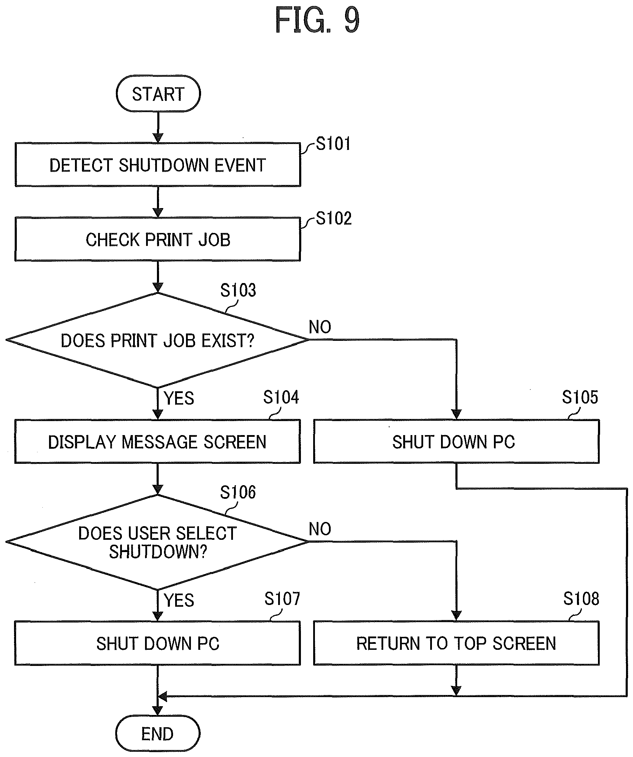

FIG. 9 is a flowchart illustrating operation performed by the client terminal 10 when the shutdown event occurs in this embodiment. As illustrated in FIG. 9, first, the event detection unit 123 detects shutdown event in S101. Next, the event controller 124 requests the service process 101 (the print job manager 113) to check the print job (whether or not the print job exists in the storing unit 130) in S102. After receiving the request, the print job manager 113 checks whether or not the print job exists in the storing unit 130 in S103.

If the check result in S103 is yes (YES in S103), the print job manager 113 reports to the event controller 124 that the print job exists in the storing unit 130. After receiving the report, instead of performing shutdown, the event controller 124 displays the message screen in S104. More specifically, the event controller 124 requests the display controller 122 to display the message screen described above (illustrated in FIG. 6). After receiving the request, the display controller 122 displays the message screen on the display 16. By contrast, if the check result in S103 is no (NO in S103), the print job manager 113 reports to the event controller 124 that the print job does not exist in the storing unit 130. After receiving the report, the event controller 124 performs shutdown in S105.

After step S104 described above, if it is selected to perform shutdown on the message screen (YES in S106), the event controller 124 performs shutdown in S107. In this embodiment, after the display controller 122 accepts that the button indicating "OK" is pressed on the message screen illustrated in FIG. 6 and reports to the event controller 124 that the button indicating "OK" is pressed, the event controller 124 determines that shutdown is selected by user operation. By contrast, after step S104 described above, if it is selected not to perform shutdown on the message screen (NO in S106), instead of performing shutdown, the event controller 124 maintains the status that the user is authenticated and switches the screen back to the top screen (home screen) in S 108. In other words, shutdown operation is canceled.

As described above, if the client terminal 10 in this embodiment detects shutdown event, the client terminal 10 controls operation of shutting down in accordance with a determination of whether or not at least one print job is stored. More specifically, if the print job is stored in the storing unit 130, instead of immediately performing shutdown, a message screen including a message indicating that the print job still exists is displayed. This prevents the user from shutting down the apparatus without recognizing that the print job still exists.

### Variations of First Embodiment

The displayed message screen described above referring to FIG. 6, and operation performed by the client terminal 10 when shutdown event is detected as illustrated in FIG. 9, are exemplary, such that there are various other ways as described below.

### (first variation)

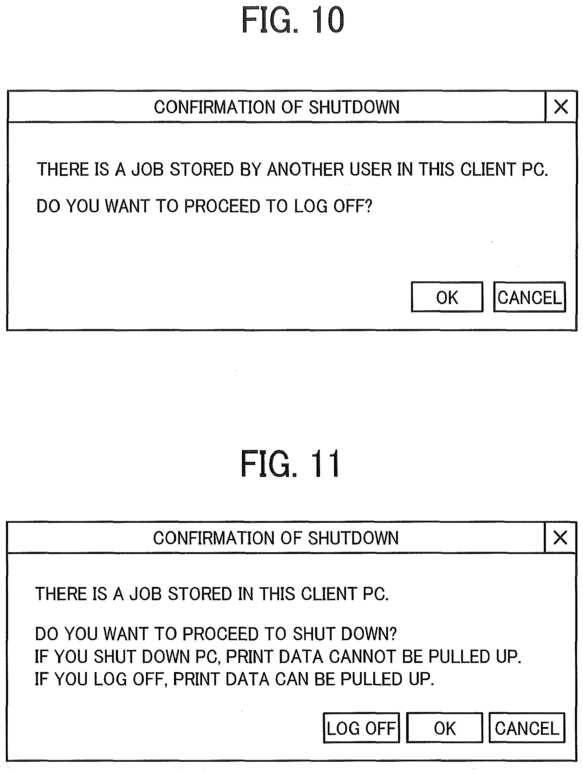

In one example, if there is no print job registered by the login user who commands to shut down, but there is at least one print job registered by another user in the storing unit 130, the client terminal 10 may display the message screen illustrated in FIG. 10. In this case, the operation to be performed by the client terminal 10 when the shutdown event occurs is similar to the operation of FIG. 9 as described above, except that the print job for another user is considered.

### (Second variation)

In another example, in addition to the message described above (indicating that the print job still exists), the message screen may further include a display component (a button typically) for accepting a command to select whether to perform shutdown, a display component for instructing to log off from the status that the user is authenticated, and a display component for cancelling shutdown. Here, in the logoff status, the power is still supplied to the client terminal 10, and the service process 101 keeps running. As a result, in accordance with a request from the printer 20, the client terminal 10 is able to transfer the print job stored in the storing unit 130 to the printer 20, even after the user is logged off.

FIG. 11 is a diagram illustrating a message screen in this modification of the embodiment. In FIG. 11, the message screen includes a button for accepting a command to shut down (the button indicating "OK"), a button for accepting a command not to shut down (the button indicating "cancel"), and a button for accepting a command to log off (the button indicating "log off'). However, the configuration of the message screen is not limited to this example described above.

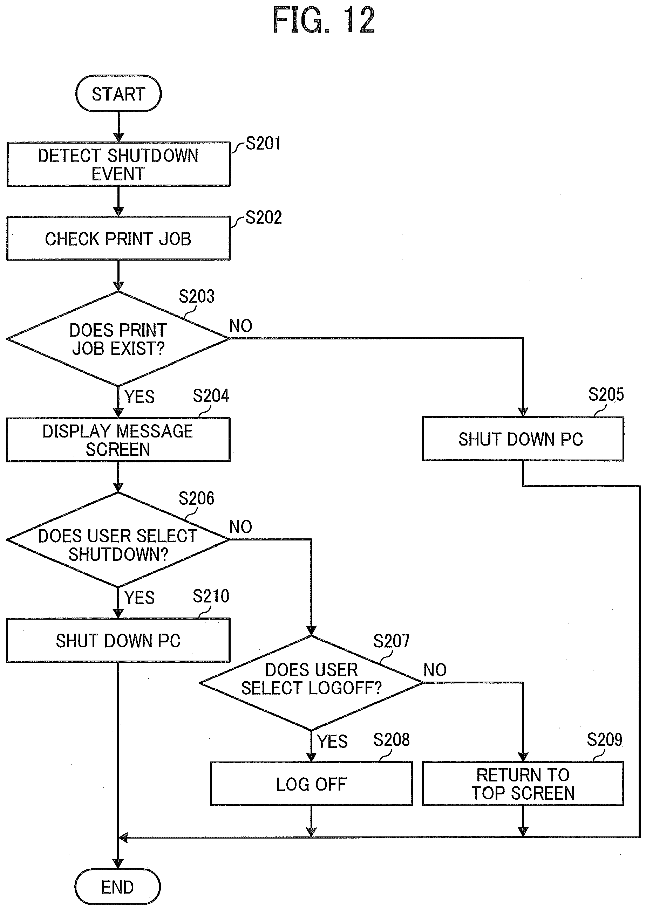

FIG. 12 is a flowchart illustrating operation performed by the client terminal 10 when shutdown event occurs in this modification of the embodiment. Operations in steps S201 to S206, and S210 are similar to the operations in steps S101 to S106, and S107 illustrated in FIG. 9. If the result in S206 is no (NO in S206), the event controller 124 determines whether or not it is selected to perform logoff in S207. In this modification, after the display controller 122 accepts that the button indicating "log off" is pressed on the message screen illustrated in FIG. 11 and reports to the event controller 124 that the button indicating "log off' is pressed, the event controller 124 determines that performing logoff is selected by user operation. If the result in S207 is yes (YES in S207), the event controller 124 performs logoff in S208.

Here, if the result in S206 is no (NO in S206) and the result in S207 is no (NO in S207), indicating that it is selected not to perform shutdown (it is accepted that the button indicating "cancel" on the message screen in FIG. 11 is pressed), instead of performing shutdown, the event controller 124 maintains the status that the user is authenticated and switches the screen back to the top screen (home screen) in S209. The operation to be performed here is similar to the operation in step S108 illustrated in FIG. 9.

### (Third variation)

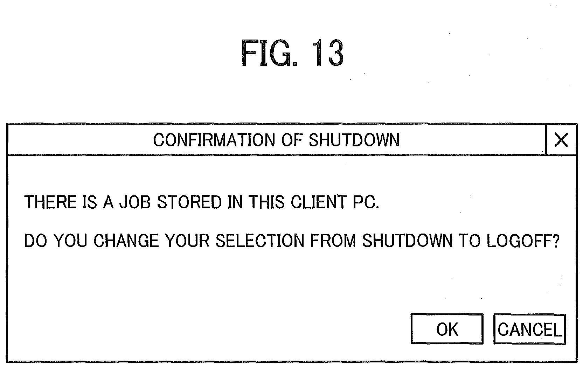

In another example, in addition to the message described above (indicating that the print job still exists), the message screen described above may further include a display component for accepting a command to select whether or not to change the instruction from performing shutdown to performing logoff. FIG. 13 is a diagram illustrating a message screen in this modification of the embodiment. In FIG. 13, the message screen includes a button for accepting a command to change the instruction from performing shutdown to performing logoff (the button indicating "OK") and a button for accepting a command not to change the instruction (the button indicating "cancel"). However, the configuration of the message screen is not limited to that example described above.

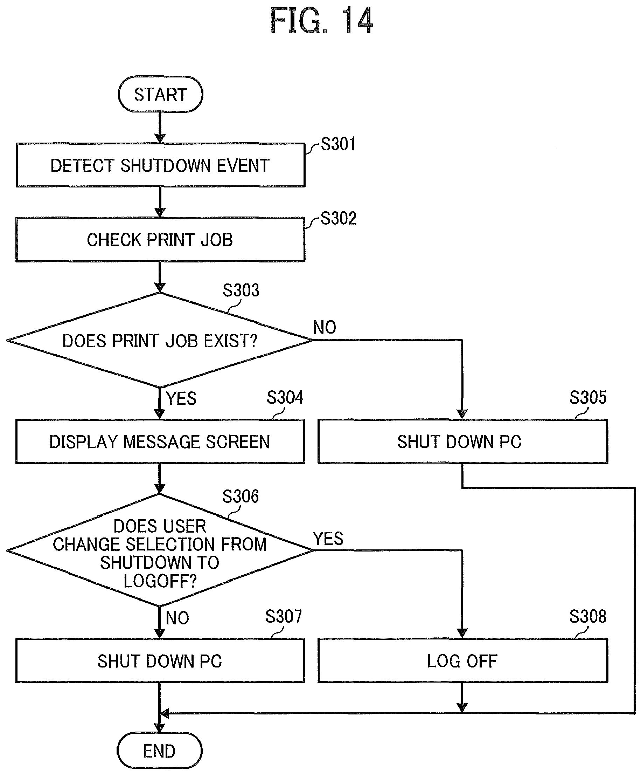

FIG. 14 is a flowchart illustrating operation performed by the client terminal 10 when shutdown event occurs in this modification of the embodiment. Operations in steps S301 to S305 are similar to the operations in steps S101 to S105 illustrated in FIG. 9.

After step S304 described above, if it is selected not to change the instruction from performing shutdown to performing logoff on the message screen (NO in S306), the event controller 124 performs shutdown in S307. In this modification, after the display controller 122 accepts that the button indicating "cancel" is pressed on the message screen illustrated in FIG. 13 and reports to the event controller 124 that the button indicating "cancel" is pressed, the event controller 124 determines that it is selected not to change the instruction from performing shutdown to performing logoff by user operation. By contrast, after step S304 described above, if it is selected to change the instruction from performing shutdown to performing logoff on the message screen (YES in S306), the event controller 124 performs logoff instead of performing shutdown in S308.

### (Fourth variation)

In the above-described embodiment, the print job information, and the print data as an example of print target data, are stored in the storing unit 130. The print target data, which is target data to be printed, may be stored in the form of any desired file format. For example, the print target data may be stored in the form of a document file such as a PDF (registered trademark) document, a Word (registered trademark) document, or an Excel (registered trademark) document, or in the form of an image file such as a JPEG file. In this case, for example, the print application 103 for pull-printing installed in the client terminal 10 detects any one of the above-described electronic files that have been stored in a specific folder in the storing unit 130, and displays the message screen.

Further, if the printer 20 requests the client terminal 10 to transfer a file name list of such files, the client terminal 10 transfers the file name list of the files stored in the specific folder. If a specific file is selected on the file name list displayed on the control panel of the printer 20, the client terminal 10 converts the selected file (i.e., the selected file is in a format that requires conversion to a different format prior to printing) into the print data (i.e., the print data is in a format that does not require conversion to a different format prior to printing such as PDL format and PRCS format etc.) and transfers the converted print data to the printer 20 for printing. That is, even if the print target data is stored in the form of an electronic file of any type, the client pull-print function may be achieved.

Furthermore, in this example, in addition to the message described above (indicating that the file still exists), the message screen may include a display component (a user interface (UI) component such as a button typically) for accepting a command to select whether or not to shut down.

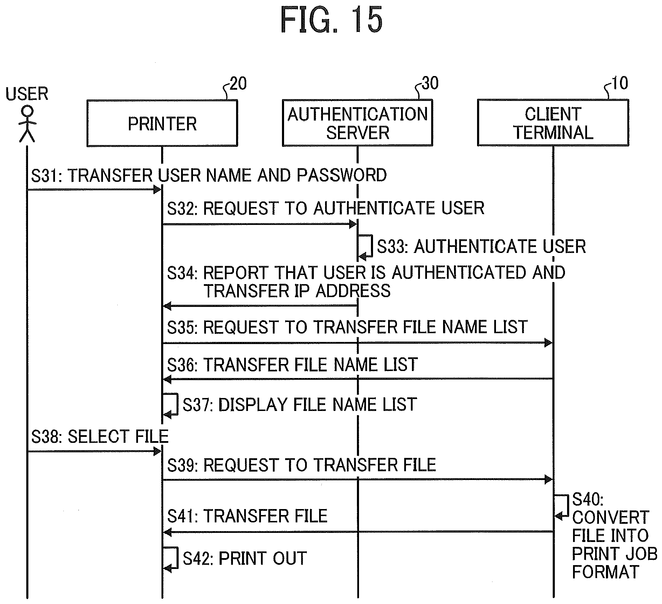

FIG. 15 is a sequence diagram illustrating operation, from acquiring the electronic file at the printer 20 from the client terminal 10 to outputting an image based on the print target data, performed by the information processing system 100 in this embodiment. The operation from inputting by user operation to the authentication (i.e., steps S31 to S34) is similar to the operation steps S11 to S14 in FIG. 8.

The printer 20 transfers a request for file name list, which includes the user name of the authenticated user, to the client terminal 10 specified by the IP address received from the authentication server 30 in S35. In response to receiving the request for file name list, the client terminal 10 acquires the file name list that lists a name of each file, which has been stored in a specific folder at the storing unit 130, and transfers the acquired file name list to the printer 20 in S36.

After receiving the file name list from the client terminal 10 as the response to the request for file name list, the printer 20 displays the received file name list in S37. The client terminal 10 receives a selection of a file as a target to be output, from the displayed file name list by user operation in S38. After accepting the operation of selecting the file, the printer 20 transfers a request for file including specifying information that specifies the file selected by user operation (such as the file name etc.) and requesting to transfer the file to the client terminal 10 in S39.

After receiving the request for file, the client terminal 10 selects the file specified by the specifying information included in the received request for file, from among one or more files stored in the storing unit 13, and converts the selected file into the print data in S40. Subsequently, the client terminal 10 transfers the converted file to the printer 20 in S41. After receiving the file from the client terminal 10 as the response to the request for file, the printer 20 prints out an image based on the print data generated from the received file in S42.

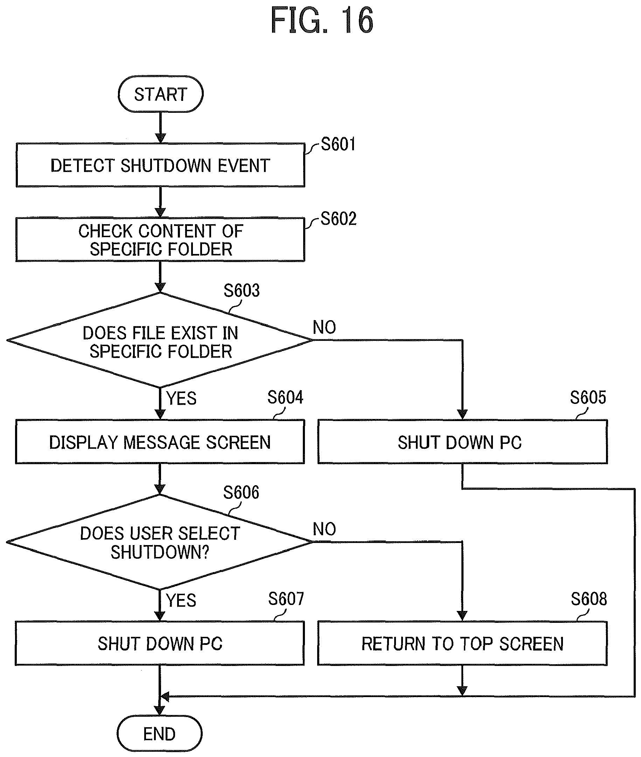

FIG. 16 is a flowchart illustrating operation performed by the client terminal 10 when shutdown event occurs in this embodiment. As illustrated in FIG. 16, first, the event detection unit 123 detects shutdown event in S601. Next, the event controller 124 requests the service process 101 (the print job manager 113) to check the specific folder in the storing unit 130 (i.e., whether or not the file exists in the specific folder) in S602. After receiving the request, the print job manager 113 checks whether or not any file exists in the specific folder in the storing unit 130 in S603.

If the check result in S603 is yes (YES in S603), the print job manager 113 reports to the event controller 124 that the file exists in the specific folder in the storing unit 130. After receiving the report, instead of performing shutdown, the event controller 124 displays the message screen in S604. More specifically, the event controller 124 requests the display controller 122 to display the message screen described above. In response to receiving the request, the display controller 122 displays the message screen on the display 16. By contrast, if the check result in S603 is no (NO in S603), the print job manager 113 reports to the event controller 124 that the file does not exist in the specific folder in the storing unit 130. After receiving the report, the event controller 124 performs shutdown in S605.

The operation after selecting whether or not shutdown is performed on the message screen (steps S606 to S608) is performed in a substantially similar manner as described above referring to S106 to S108 in FIG. 9.

### (Fifth variation)

In another example, the message screen may be displayed or not displayed, depending on whether or not the print application for pull-print is installed in the client terminal 10. In this example, the client terminal 10 notifies the user of a possibility of any data that may be later printed, as long as the print application for pull-print is installed.

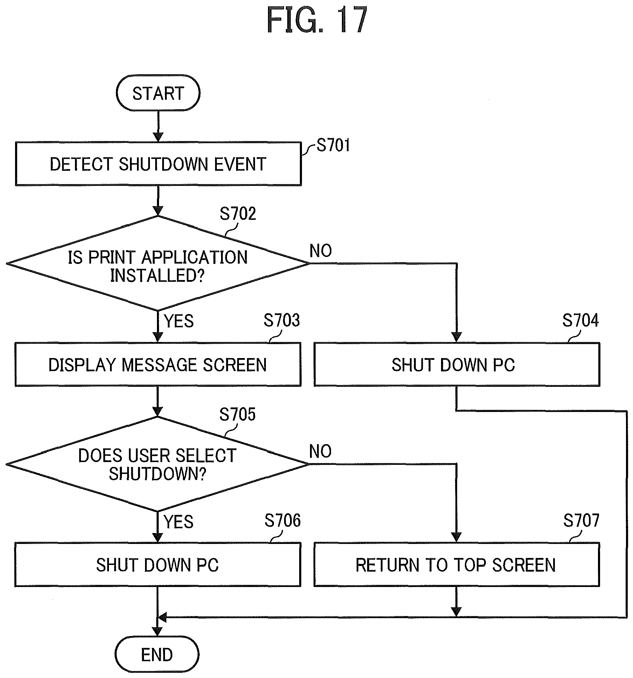

FIG. 17 is a flowchart illustrating operation performed by the client terminal 10 when shutdown event occurs in this embodiment. As illustrated in FIG. 17, first, the event detection unit 123 detects shutdown event in S701. Next, the event controller 124 checks whether or not the print application 103 is installed in the client terminal 10 in S702.

If the result in S702 is yes (YES in S702), instead of performing shutdown, the event controller 124 displays the message screen in S703. More specifically, the event controller 124 requests the display controller 122 to display a message screen, which warns the user to check whether there is any data being stored for printing. In response to receiving the request, the display controller 122 displays the message screen on the display 16. By contrast, if the result in S702 is no (NO in S702), the event controller 124 performs shutdown in S704.

The operation after selecting whether or not shutdown is performed on the message screen (steps S705 to S707) is similar to the operation steps S 106 to S 108 in FIG. 9.

### (Sixth variation)

In another example, if the print application for pull-print is installed in the client terminal 10, the message screen may be displayed in accordance with a setting of whether or not to report the user by displaying the message screen.

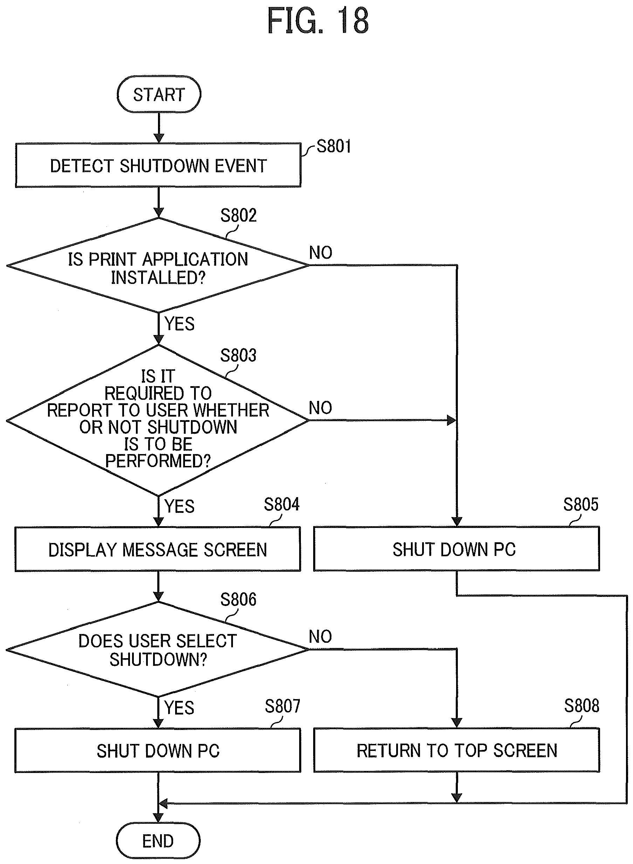

FIG. 18 is a flowchart illustrating operation performed by the client terminal 10 when shutdown event occurs in this embodiment. As illustrated in FIG. 18, first, the event detection unit 123 detects shutdown event in S801. Next, the event controller 124 checks whether or not the print application 103 is installed in the client terminal 10 in S802.

If the result in S802 is yes (YES in S802), the event controller 124 checks whether it is required to report to the user or it is unnecessary to report to the user in S803. If the result in S803 is yes (YES in S803), instead of performing shutdown, the event controller 124 displays the message screen in S804. More specifically, the event controller 124 requests the display controller 122 to display the message screen, which warns the user to check whether there is any data being stored for printing. In response to receiving the request, the display controller 122 displays the message screen on the display 16.

By contrast, if the result in S802 is no (NO in S802) or the result in S803 is no (NO in S803), the event controller 124 performs shutdown in S805.

The operation after selecting whether or not shutdown is performed on the message screen (steps S806 to S808) is similar to the operation steps S106 to S108 in FIG. 9.

### Second embodiment

Next, the second embodiment is described below. In this embodiment, if the print job is stored in the storing unit 30, the event controller 124 performs logoff to discard the status that the user is authenticated, instead of performing shutdown. That is, unlike the first embodiment described before, the client terminal 10 automatically performs logoff without displaying the message screen. Since the configuration of the apparatus is substantially similar to the configuration described in the first embodiment, except for the function of the event controller 124, description of common functions is omitted.

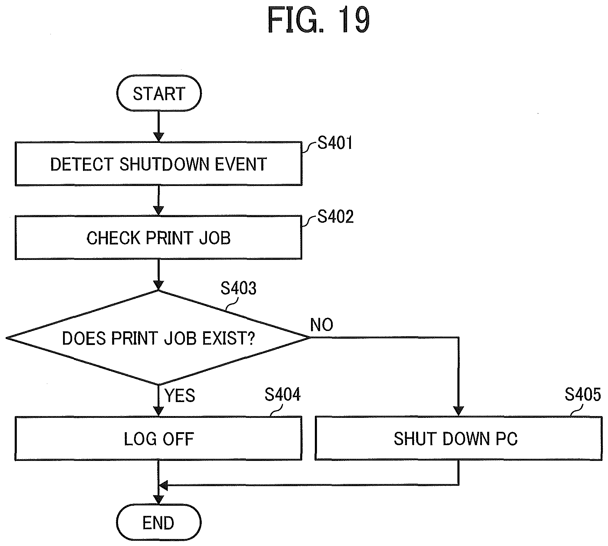

FIG. 19 is a flowchart illustrating operation performed by the client terminal 10 when shutdown event occurs in this embodiment. Operations in steps S401 to S403 in FIG. 19 are similar to the operations in steps S101 to S103 illustrated in FIG. 9.

If the result in S403 is yes (YES in S403), the event controller 124 performs logoff in S404. By contrast, if the result in S403 is no (NO in S403), the event controller 124 performs shutdown in S405.

In this embodiment, even if the shutdown event occurs, logoff is performed instead of performing shutdown if the print job still exists in the client terminal 10. In the logoff status, the power is still supplied to the client terminal 10, and the service process 101 keeps running. Therefore, in accordance with a request from the printer 20, the client terminal 10 is able to transfer the print job stored in the storing unit 130 to the printer 20. As a result, even if the user does not know that the print job still exists in the client terminal 10 and commands to perform shutdown, the printer 20 may acquire the print job from the client terminal 10 and perform printing based on the print job.

### (Variation)

The second embodiment may be performed in various other ways.

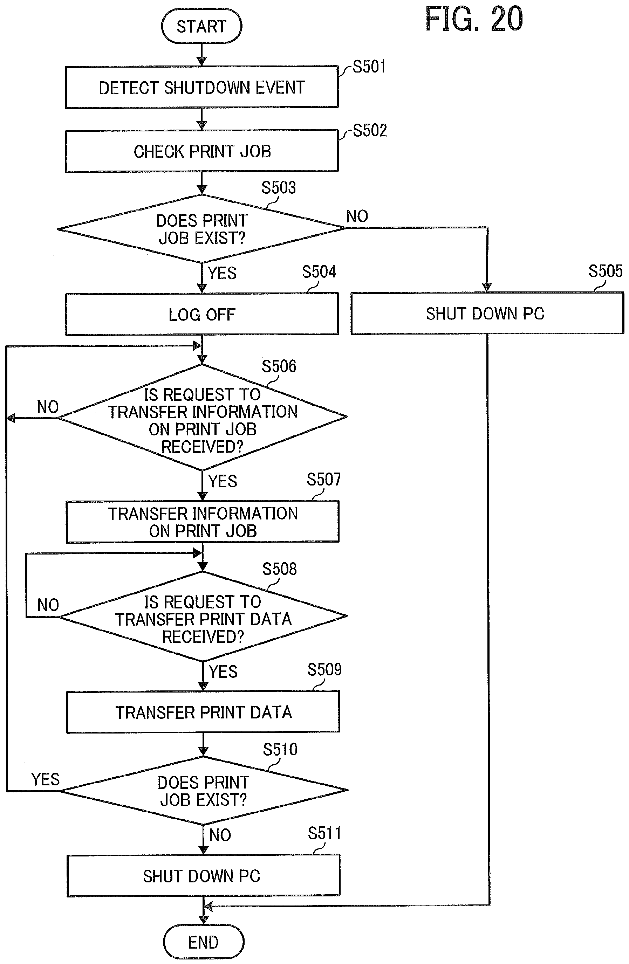

In one example, after performing logoff, if the print job does not exist in the storing unit 130, the event controller 124 may perform shutdown. FIG. 20 is a flowchart illustrating operation performed by the client terminal 10 when shutdown event occurs in this variation. Operations in steps S501 to S505 in FIG. 20 are similar to the operations in steps S401 to S405 illustrated in FIG. 19.

After step S504, the client terminal 10 (service process 101) waits for a request to transfer print job from the printer 20. If the print job request receiver 115 receives the request for print job information described above (YES in S506), in accordance with the received request for print job information, the print job transmitter 116 obtains the print job information stored in the storing unit 130 and transfers the print job information to the printer 20 in S507. Subsequently, if the print job request receiver 115 receives the request for print target data described above (YES in S508), in accordance with the received request for print target data, the print job transmitter 116 obtains the print target data stored in the storing unit 130 and transfers the print target data to the printer 20 in S509.

After step S509, the print job manager 113 checks whether or not the print job exists in the storing unit 130 in S510. If the result in S510 is yes (YES in S510), operations after step S506 described above are repeated. If the result in S510 is no (NO in S510), the print job manager 113 reports to the corresponding user process 102 that the print job does not exist in the storing unit 130. Among the functions that received the report included in the user process 102, at least, the event controller 124 gets activated and performs shutdown in S511. The configuration of the system is not limited to the example described above. For example, functions of the event controller 124 may be implemented in the service process 101.

The embodiments described above provide an information processing apparatus that is capable of performing control appropriately in shutting down the client PC in the client pull-print system.

Numerous additional modifications and variations are possible in light of the above teachings. It is therefore to be understood that within the scope of the appended claims, the disclosure of the present invention may be practiced otherwise than as specifically described herein.

As described above in one embodiment, rather than selecting data to be printed at the client terminal 10, the user may select the data to be printed at the printer 20 using, for example, a control panel provided on the printer 20. In such case, in response to a user request, the printer 20 communicates with the client terminal 10 to obtain information regarding electronic files stored on the client terminal 10, and display the list of electronic files on a display provided on the control panel. From the list, the user may select one or more files to be printed at the printer 20. The printer 20 then requests the client terminal 10 to send the selected one or more files.

Further, the illustrated server apparatuses are only illustrative of one of several computing environments for implementing the embodiments disclosed herein. For example, in some embodiments, the client terminal 10 and the printer 20 can be configured to share the processing steps in various combinations. For example, when detecting an event causing shutdown of the client terminal 10, the printer 20 may request the client terminal 10 to control shutdown of the client terminal 10, for example, through displaying a message to the user at the client terminal 10, based on a determination whether there is any print target data subjected to printing. The print target data subjected to printing may be, for example, print target data to be transferred to the printer 20 for output.

Moreover, in alternative to waiting for a user instruction to proceed with shutdown of the client terminal 10 after displaying a message that warns the user of existence of the print target data, in response to detection of the shutdown event, the client terminal 10 may wait for a predetermined time period, and proceeds with shut down of the client terminal 10 unless the client terminal 10 detects a user instruction to stop shutdown.

The above-described embodiments describe the case where a user instruction for shutting down becomes a trigger for performing determination of whether to control shutdown. However, any other event that may cause shutdown of the client terminal 10 may be considered as the shutdown event as a trigger.

For example, elements and/or features of different illustrative embodiments may be combined with each other and/or substituted for each other within the scope of this disclosure and appended claims.

As can be appreciated by those skilled in the computer arts, this invention may be implemented as convenient using a conventional general-purpose digital computer programmed according to the teachings of the present specification. Appropriate software coding can readily be prepared by skilled programmers based on the teachings of the present disclosure, as will be apparent to those skilled in the software arts. The present invention may also be implemented by the preparation of application-specific integrated circuits or by interconnecting an appropriate network of conventional component circuits, as will be readily apparent to those skilled in the relevant art.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. An information processing apparatus (10), comprising:
a memory (13, 14) configured to store print target data; and
a processor (11) configured to
control transfer of the print target data stored in the memory (13, 14) to an output apparatus (20) in response to a request for print target data that is received from the output apparatus (20);
detect a shutdown event as a trigger for shutting down the information processing apparatus (10); and
control shutdown of the information processing apparatus (10) according to a determination of whether the print target data subjected to printing is stored in the memory (13, 14), when the shutdown event is detected.

2. The information processing apparatus (10) according to claim 1, wherein the print target data includes a print job.

3. The information processing apparatus (10) according to claim 1 or 2,
wherein, when the determination indicates that the print target data subjected to printing is not stored in the memory (13, 14), the processor (11) proceeds with completing shutdown of the information processing apparatus (10), and
wherein, when the determination indicates that the print target data subjected to printing is stored in the memory (13, 14), the circuitry controls a display (16) to display a screen including a message indicating that the print target data subjected to printing exists.

4. The information processing apparatus (10) according to claim 3,
wherein the displayed screen further includes a display component for accepting an instruction that selects whether or not to proceed with completing shutdown of the information processing apparatus (10).

5. The information processing apparatus (10) according to claim 3,
wherein the processor (11) further authenticates a user to determine whether or not the user has authority to use the information processing apparatus (10),
wherein the screen further includes a display component for accepting a user instruction that selects any one of operations including operation to shut down the information processing apparatus (10), operation to log off the user by discarding a status that the user is authenticated, and operation to cancel shutdown of the information processing apparatus (10).

6. The information processing apparatus (10) according to claim 5,
wherein the processor (11):
shuts down the information processing apparatus (10) when accepting the instruction that selects to shut down the information processing apparatus (10);
logs off the information processing apparatus (10) when accepting the instruction that logs off the information processing apparatus (10); and
cancels shutdown of the information processing apparatus (10) when accepting the instruction that selects not to shut down the information processing apparatus (10).

7. The information processing apparatus (10) according to claim 3,
wherein the processor (11) further authenticates a user to determine whether or not the user has authority to use the information processing apparatus (10),
wherein the screen further includes a display component for accepting an instruction that selects whether or not to change the instruction to shut down the information processing apparatus (10) to an instruction to log off the user from the information processing apparatus (10).

8. The information processing apparatus (10) according to claim 7,
wherein the processor (11) further:
logs off the information processing apparatus (10) when accepting the instruction that selects to change the instruction to shut down the information processing apparatus (10) to the instruction that logs off the information processing apparatus (10); and
shuts down the information processing apparatus (10) when accepting the instruction that selects not to change the instruction to shut down the information processing apparatus (10) to the instruction to log off the user from the information processing apparatus (10).

9. The information processing apparatus (10) according to claim 1,
wherein the print target data is an electronic file,
wherein, when the electronic file is not stored in a specific folder in the memory (13, 14), the processor (11) shuts down the information processing apparatus (10), and
wherein, when the electronic file is stored in the specific folder in the memory (13, 14), the processor (11) displays a screen including a message indicating that the electronic file exists.

10. The information processing apparatus (10) according to claim 1 or 2,
wherein the processor (11) further authenticates a user to determine whether or not the user has authority to use the information processing apparatus (10),
wherein, when the print target data is not stored in the memory (13, 14), the processor (11) shuts down the information processing apparatus (10), and
wherein, when the print target data is stored in the memory (13, 14), the processor (11) logs off the information processing apparatus (10) discarding a status that the user is authenticated.

11. The information processing apparatus (10) according to claim 10,
wherein, when the print job is stored in the memory (13, 14), the processor logs off the user from the information processing apparatus (10), before shutting down the information processing apparatus (10).

12. The information processing apparatus (10) according to claim 1, wherein the print target data is one of (i) an electronic file that is in a format that requires conversion to a different format prior to printing and (ii) an electronic file that is in a format that does not require conversion to a different format prior to printing.

13. The information processing apparatus (10) according to claim 1, wherein the processor is configured to control display of a message to the user that print target data corresponding to different user is stored in the memory (13, 14) prior to proceeding with completing shutdown of the information processing apparatus (10).

14. A method of processing information performed by an information processing apparatus (10), the method comprising:
storing print target data in a memory (13, 14) of the information processing apparatus (10);
controlling transfer of the print target data stored in the memory (13, 14) to an output apparatus (20) in response to a request for print target data that is received from the output apparatus (20);
detecting a shutdown event as a trigger for shutting down the information processing apparatus (10);
determining whether print target data subjected to printing is stored in the memory (13, 14); and
controlling shutdown of the information processing apparatus (10) according to a result of the determining.

15. A carrier means carrying computer readable code for controlling a computer to carry out the method of claim 14.
